# EUROPEAN PATENT APPLICATION

(11) **EP 2 073 193 A1**
(43) Date of publication of application: **24.06.2009**
(21) Application number: 07024420.7
(22) Date of filing: 17.12.2007
(51) Int. Cl.: G10H 1/00

(54) **Method and device for generating a soundtrack**

(71) Applicant: Sony Corporation, Minato-ku Tokyo 108-0075 (JP)
(72) Inventor: Giron, Franck, 70327 Stuttgart (DE); Kemp, Thomas, 70327 Stuttgart (DE); Lam, Yin Hay, 70327 Stuttgart (DE); Schaaf, Thomas, 70327 Stuttgart (DE); Zumkeller, Markus, 70327 Stuttgart (DE)
(74) Representative: Müller - Hoffmann & Partner

(57) **Abstract**

A Method for generating a soundtrack, comprising: determining a query for at least two sections of a sequence of pictures based on a respective description of said at least two sections, said query comprising meta data of a music database; determining a piece of music for each of said at least two sections based on a respective query, wherein said piece of music is selected from said music database.

## Description

An embodiment of the invention relates to a method for generating a soundtrack. A further embodiment of the invention relates to a device for generating a soundtrack.

### BACKGROUND OF THE INVENTION

In current applications for video cutting or images post-processing, where the user is eventually given the possibility to reorganize his own video or images database to his personal taste, the soundtrack aspect is often neglected. However, many users have the wish to give their own creation a touch of professionalism or at least make this creation more attractive if they want to diffuse or present it to themselves or their relatives. It is well known, e.g. in motion pictures, that the soundtrack plays a very important role to give a more interesting feeling. In current video cutting systems, the user is given the complete decision about the way to add some soundtrack to its current creation without any guidelines. Moreover the process of soundtrack creation is certainly difficult for most people without any or little musical knowledge and the choice is consequently limited to some predefined existing musical pieces available with the system or existing musical database, which is not obligatory well matched to the visual part.

Thus, it is an object of embodiments of the invention to provide a method and device for generating a soundtrack.

This object is solved by a method and device according to claims 1, and 17, respectively.

Further details of embodiments of the invention will become apparent from a consideration of the drawings and ensuing description.

### BRIEF DESCRIPTION OF THE SEVERAL VIEWS OF THE DRAWINGS

- **Fig. 1A**: shows the user's needs;
- **Fig. 1B**: shows several sections of a sequence of pictures having an assigned description;
- **Fig. 2A**: shows steps of an embodiment of the invention;
- **Fig. 2B**: shows steps of a further embodiment of the invention;
- **Fig. 3**: shows steps of a still further embodiment of the invention;
- **Fig. 4**: shows a flow chart of a further embodiment of the invention;
- **Fig. 5**: shows still a further flow chart of a further embodiment of the invention;
- **Fig. 6**: shows still a further flow chart of a further embodiment of the invention;
- **Fig. 7**: shows how a sequence of songs is determined based on several candidate lists;
- **Fig. 8**: shows a mood space;
- **Fig. 9**: shows a graphical user interface;
- **Fig. 10**: shows a further flow chart of a further embodiment of the invention;
- **Fig. 11**: shows a further flow chart of a further embodiment of the invention;
- **Fig. 12**: shows a further flow chart of a further embodiment of the invention;
- **Fig. 13**: shows a further flow chart of a further embodiment of the invention.

### DETAILED DESCRIPTION OF THE INVENTION

In the following, embodiments of the invention are described. It is important to note, that all embodiments described in the following may be combined in any way, i.e. there is no limitation that certain described embodiments may not be combined with others.

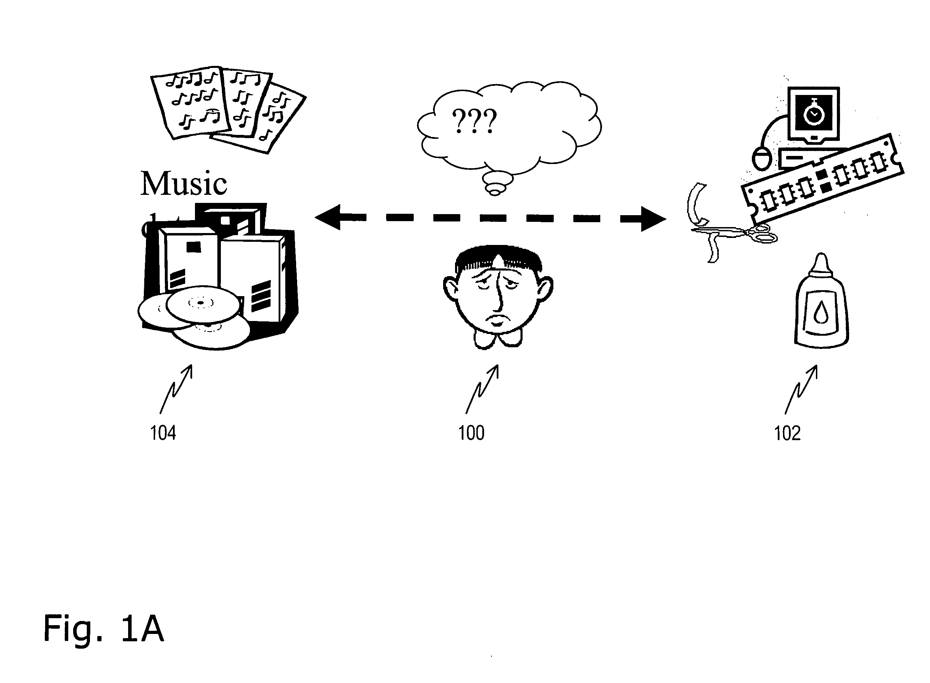

In Fig. 1A. a user 100 has created a video 102 e.g. based on cutting out certain sections and concatenating the sections together in a new order. User 100 may now want to make his video more enjoyable by providing a soundtrack. However, creating a soundtrack is difficult. In general, the task is to assign a piece of music to each or selected sections of video 102. Therefore, a music database 104 is provided comprising a large number of pieces of music, e.g. songs or the like. However, selecting pieces of music from database 104 which pieces of music match to a certain section is a difficult task.

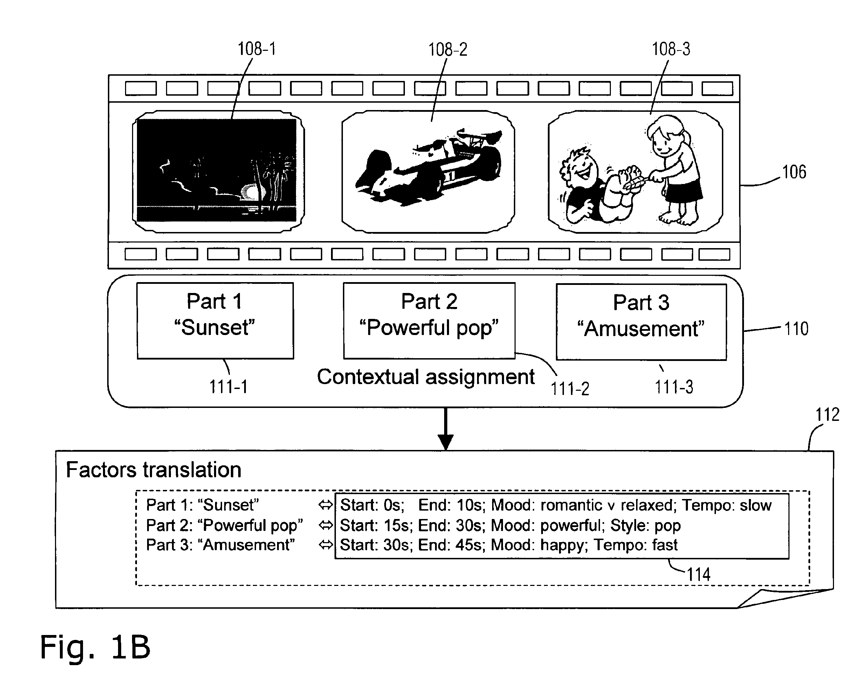

Fig. 1 B shows a video sequence 106 comprising a first section 108-1, second section 108-2, and third section 108-3. In the following, the term "section" and "part" may be used synonymously.

The first section 108-1 may comprise a sunset scene, the second section 108-2 may comprise scenes from a car race, and the third section 108-3 might comprise a scene with playing children.

In order to generate a suitable soundtrack for video sequence 106, the user may provide a description 110 for the different sections 108-1 to 108-3. Therefore, the user may enter for each section 108 a respective section description 111-1, 111-2, 111-3. The section descriptions 111 may be freely set by the user or may be selected from a database containing predefined section descriptors. For the selection of predefined section descriptors a graphical user interface may be provided.

In the example of Fig. 1B, the user may set a first section descriptor 111-1 to "sunset", a second section descriptor 111-2 to "powerful pop" and a third section descriptor 111-3 to "amusement".

The term "section descriptor" may in the following be used synonymously with "contextual assignment".

The section descriptors 111-1, 111-2, 111-3 are then input into a query generator 112 configured to generate a query based on said section descriptors 111. In the following, generating a query may also be referred to as "factors translation", because the contextual assignments (section descriptors) are translated into factors. The term "factor" refers to metadata of a music database. In other words, the query is based on factors (metadata) that is suitable to be used in connection with a music database for searching the music database, e.g. music database 104 of Fig. 1A.

The generated query 114 comprises metadata matching with the section descriptors 11 1. In a further embodiment, query 114 may also comprise starting and end points in time and/or the length of sections 108. The reason is, that depending on the application, the length of the piece of music to be selected should match to the length of the sections 108.

As can be seen in Fig. 1B, in order to represent section descriptor 111-1 "sunset" the following metadata is assigned: mood = romantic or relaxed, and tempo = slow. Similarly, for second section 108-2 second section descriptor 111-2 "powerful pop" is converted to metadata mood = powerful and style = pop. The metadata for third section 111-3 is mood = happy, and tempo = fast.

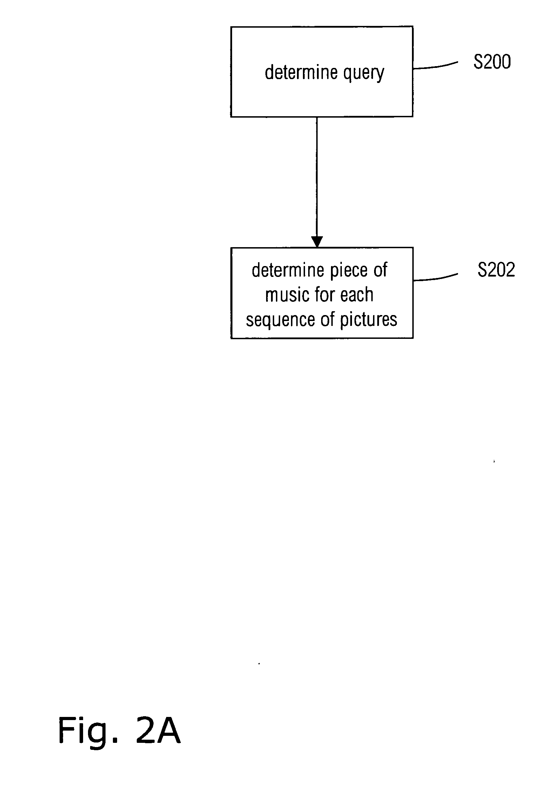

Fig. 2A shows steps that may be performed according to an embodiment of the invention. In a step S200, a query is determined for at least two sections, e.g. sections 108-1 and 108-2 of Fig. 1B, of a sequence, e.g. sequence 106 of Fig. 1B, of pictures based on a respective description, e.g. description 110 of Fig. 1B, of the at least two sections. Said query may comprise metadata of a music database, e.g. the music database 104 of Fig. 1A. The sequence of pictures may be a video sequence or a sequence of still images, e.g. a slideshow. The sequence of pictures may also be a mixture of a video sequence and still pictures.

In a further step S202, a piece of music is determined for each of the at least two sections based on a respective query. For example, a first piece of music may be determined for the first section 108-1 in Fig. 1B based on the first part of query 114 of Fig. 1B. i.e. based on mood = romantic or relaxed, and tempo = slow. Thus a suitable piece of music for the sunset scene of section 108-1 may be found.

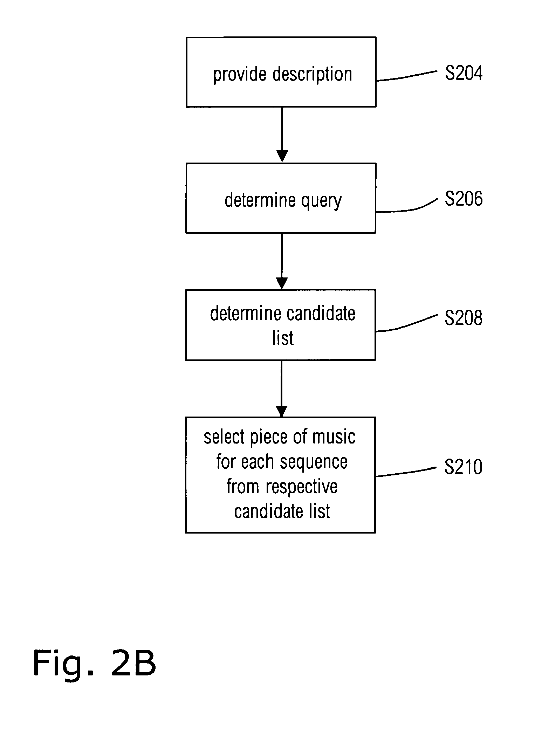

In a further embodiment of the invention shown in Fig. 2B, in a step S204, a description is provided of at least two sections, e.g. sections 108-1 and 108-2 of Fig. 1B. The description may be context based and may be set by a user as described above. Alternatively, the description may also be provided by automatic video analysis.

Then, in step S206, a query is determined based on the description, wherein the query comprises metadata of a music database. In other words, in order to determine the query, the description, e.g. a section description of each section, may be converted to suitable metadata that can be used for searching the music database.

In step S208, a candidate list is determined essentially for each of the at least two sections. In other words, e.g. for each section 108-1 to 108-3, a candidate list comprising a plurality of possibly matching music pieces is determined. Depending on the size of the music database, each candidate list may comprise up to 100, 1000, 10.000 or even more songs.

In a further step S210, from each candidate list, one piece of music may be selected.

Thus, in step S210 a first piece of music may be selected from the first candidate list of the first section 108-1 of Fig. 1B, and a second piece of music may be selected from a second candidate list of the second section 108-2 of Fig. 1B. The second piece of music may be selected depending on the first piece of music e.g. based on a distance measure or similarity measure. Depending on the application, it might be desirable that two pieces of music following each other in the soundtrack match each other at least to some extend, and e.g. provide a smooth transition.

Therefore, a distance measure may be determined essentially for all pieces of music of the second candidate list with respect to the first piece of music, and the second piece of music having a lowest distance measure of all pieces of music of the second candidate list may be selected for second section 108-2. The first piece of music may be selected randomly.

In a further embodiment, the distance measure may depend on metadata of the first and/or second piece of music. Metadata can e.g. be genre, mood, era, and may be determined automatically or from a hand labeled database.

In other words, it may be possible to calculate a distance measure between songs from different candidate lists. The distance measure may depend on an audible property of the first and/or second piece of music. An audible property is noticeable by the user and may e.g. be parameters such as beats per minute, the mood (e.g. "romantic") and so on. The audible property may be determined automatically. Thus, e.g. automatic mood detection may be applied for determining a mood of a respective piece of music.

In a further embodiment, the first and/or second piece of music may be selected depending on a total length in time of the sequence of pictures or at least of respective length's of sections. This way, it may be avoided that a piece of music selected to accompany the first section 108-1 of Fig. 1B lasts longer than the first section 108-1 and, thus, is also partly accompanying second section 108-2. This would be undesirable because a romantic song selected for the sunset of first section 108-1 would not fit to the car race of the second section 108-2.

In a further embodiment, the first and/or second piece of music may be determined based on a Viterbi search and/or based on Dynamic Time Warping. Thus, a Viterbi search or Dynamic Time Warping taking into account the distance measures between songs of the different candidate lists may be performed.

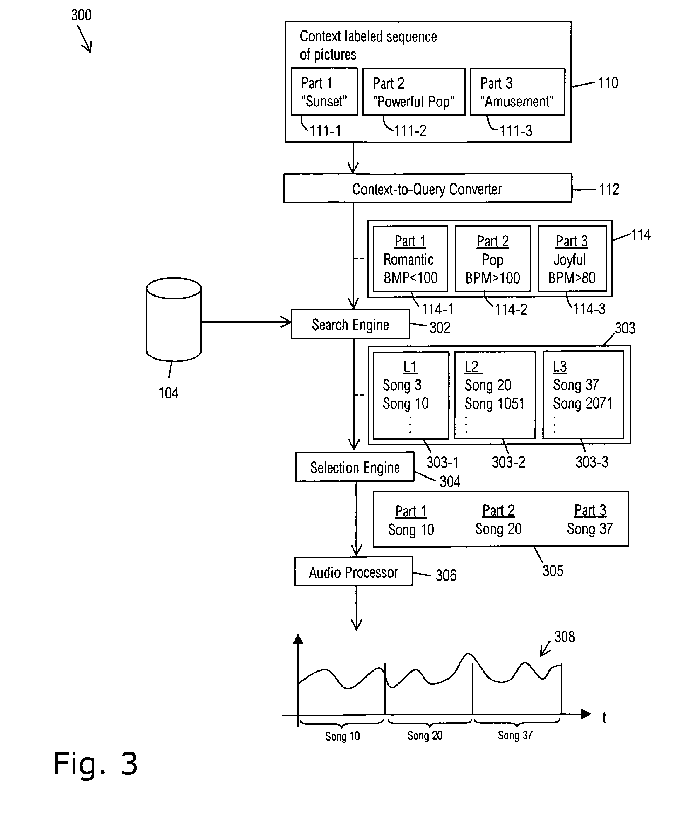

Fig. 3 shows a further embodiment of a system 300 having as input description 110 comprising the first to third section descriptors 111-1, 111-2, 111-3.

In converter module 112, in the following also referred to as context-to-query-converter or query generator, the section descriptors 111 are transformed into a query 114. Query 114 may comprise first to third parts 114-1, 114-2, 114-3. The first part 114-1 may correspond to a query to find a piece of music matching to section descriptor 111-1 "sunset". Thus, query part 114-1 may be set to mood = romantic or relaxed, and tempo in Beats per Minute (BPM) is smaller than 100. The second part of the query 114-2 may correspond to the second section descriptor 111-2 and so on.

Then, in a search engine 302, the different parts of the query 114-1, 114-2, 114-3 may be used to find suitable pieces of music, e.g. songs, in music database 104.

Generally, the music database 104 may comprise several thousands, hundreds of thousands or more songs. Therefore, a respective part of the query 114-1, 1 14-2, 114-3 may lead to a very large number of matching songs. All or at least a part of the songs found for a respective part of the query is assigned to a respective candidate list 303-1, 303-2, 303-3. In the example of Fig. 3, the first candidate list 303-1 comprises e.g. song no. 3 and song no. 10 of database 104. Song 3 and song 10 fulfill the first part of the query 114-1, i.e. in the example of Fig. 3 songs 3 and 10 would be romantic and the beats per minute BPM would be smaller than 100. Similarly, the second candidate list 303-2 comprises songs matching the second part of the query 114-2 and so on.

The task of selection engine 304 may be to select one song from each candidate list 303. This may be done by minimizing a distance measure, which distance measure is computed between songs of subsequent candidate lists.

In one embodiment, a first song from list 303-1 may be selected randomly. Then, a song from the second list 303-2 may be selected having the smallest distance with respect to the first song of the first list of all the songs of the second list 303-2. This is repeated for selecting a song from the third list 303-3. Therefore, the distance between selected song from list 303-2 to all of the songs of list 303-3 may be computed and the song having the smallest distance with respect to the second song is selected from third list 303-3.

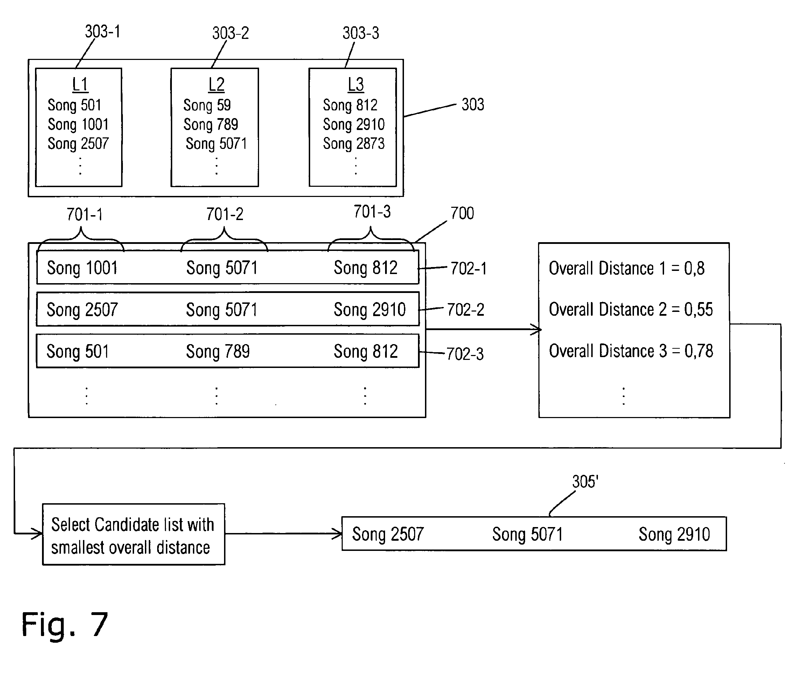

In a further embodiment, the process of randomly selecting a first song from the first list 303-1 and selecting second and third songs from lists 303-2, 303-3 based on minimizing the distance may be repeated several times. Thus, there may be a plurality of song sequences (for a detailed description of this, see Fig. 7).

In order to finally select a song sequence 305, the overall distance of each of the possible song sequences may be determined and the sequence having the smallest overall distance may be selected.

In the example of Fig. 3, the selected song sequence 305 comprises song 10 of first candidate list 303-1, song 20 of second candidate list 303-2, and song 37 of third candidate list 303-3.

Subsequently, the song sequence is processed by an audio processor 306 outputting soundtrack 308. Audio processor 306 may e.g. perform tasks such as fading in/fading out or cross fading of the pieces of music of selected song sequence 305.

In a further embodiment, audio processor 306 may also cut out only the chorus of a respective song. This may be done automatically.

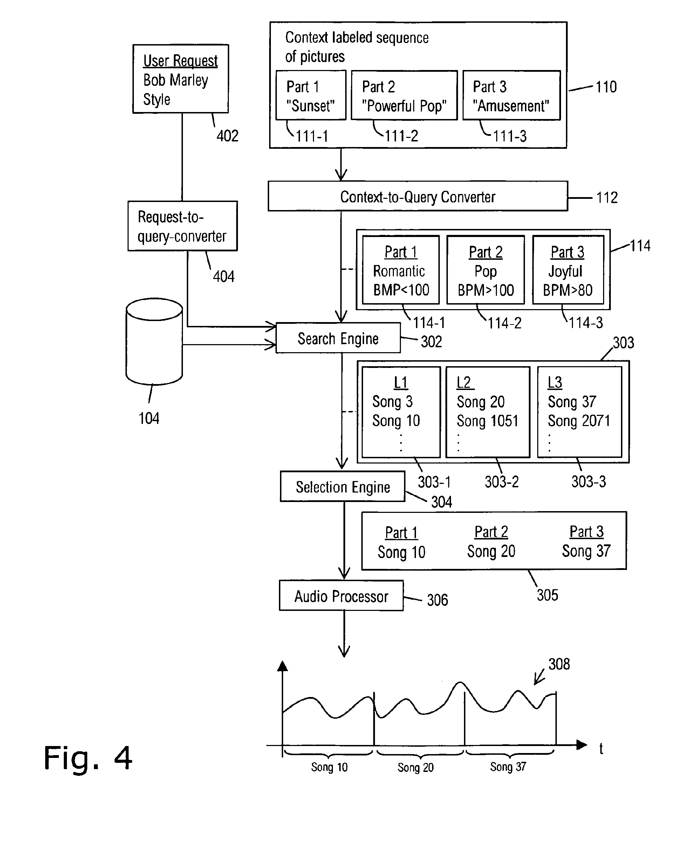

In a further embodiment of the invention shown in Fig. 4, the user may input a user request 402. The user request may e.g. state that the user requires having a piece of music of Bob Marley style for the first piece of music accompanying the first section 108-1. In order to use this user request 402 in the search, a request-to-query-converter 404 may convert the user request to a suitable query which can be used in search engine 302 together with query 114.

Additionally and/or alternatively, search engine 302 may also automatically determine a similarity measure between songs of Bob Marley and songs of first candidate list 303-1 determined only based on query 114. If the similarity in candidate list 303-1 is low to songs of Bob Marley, then these songs may be removed from candidate list 303-1.

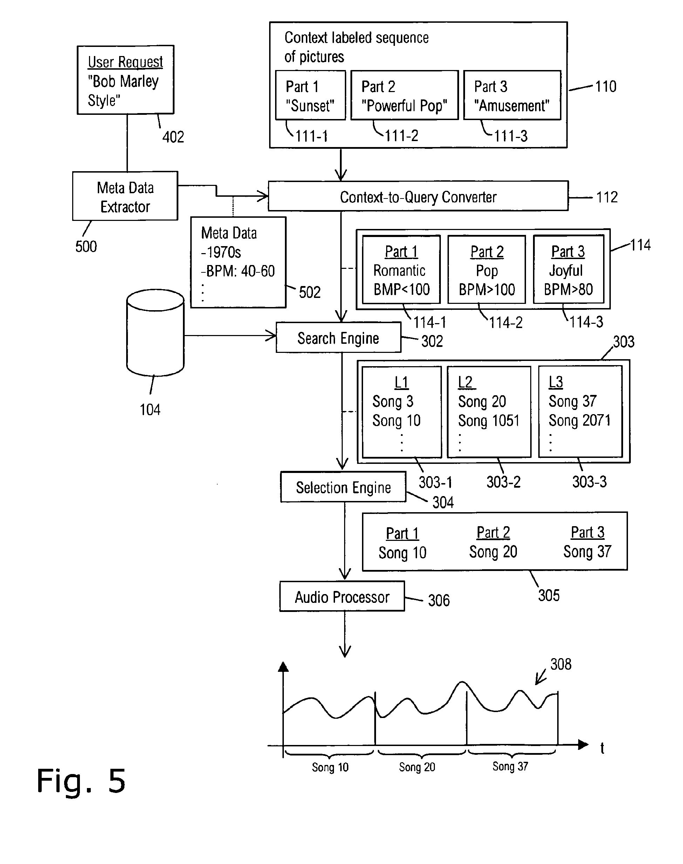

In a further embodiment shown in Fig. 5, user request 402 may be processed in a metadata extractor 500. Metadata extractor 500 may extract the metadata of songs of Bob Marley contained in the database. Metadata 502 of songs of Bob Marley may e.g. be era: 1970s beats per minute BPM = 40 to 60. Context-to-query-converter 112 may then determine a respective query taking into account metadata 502 depending on user request 402.

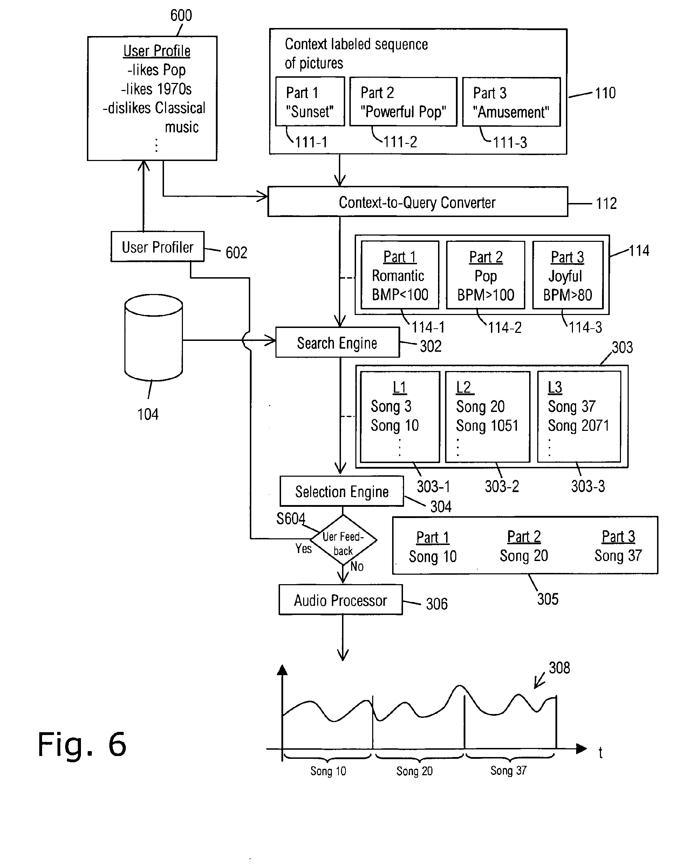

In a further embodiment of the invention shown in Fig. 6, a user profile 600 is used within context-to-query-converter 112 in order to determine the query for search engine 302. In the example of Fig. 6, user profile 600 might indicate that the user likes pop and songs from the 1970s, and dislikes classical music.

In step S604 of Fig. 6, the selected song sequence 305 may be rated by the user. Thus, the user may give user feedback which may be used for updating user profile 600 based on a user profiler 602. For example, if the user, in step S604, states that he does not like the selected song sequence 305, then user profile 600 might be updated and a new song sequence 305 may be determined as explained above.

Fig. 7 illustrates how a song sequence 305' may be determined from candidate lists 303-1 to 303-3.

As said above, from each candidate list 303-1, 303-2, 303-2 one song may be selected. Therefore, a first song 701-1 may be selected from first candidate list 303-1, a second song 701-2 may be selected from second list 303-2, and a third song 701-3 might be selected from third candidate list 303-3. The first song 701-1 may be selected randomly from first candidate list 303-1. In order to select the second 701-2 from candidate list 303-2, the distance between all of the songs of the second candidate list 303-2 and the randomly selected first song 701-1 may be calculated. Then, the song having the lowest distance, i.e. highest similarity, to the first song 701-1 may be selected as second song 701-2. The third song 701-3 is selected accordingly depending on the similarity to the second song 701-2. In this way, a first candidate sequence 702-1 may be determined. In the example of Fig. 7, candidate sequence 702-1 comprises song 1001, song 5071, and song 812.

In the described way, a plurality of candidate sequences 702-1, 702-2, 702-3, ... may be determined. In order to select one of the candidate sequences 702 as output sequence 305', the overall distance may be computed for each of the candidate lists 702. The overall distance may be computed by adding the distances between the first and second, and second and third song of a respective candidate sequence 702. Of course, if there are more than three sequences there would be more songs in each candidate sequence 702.

In the example of Fig. 7, the second candidate sequence 702-2 has the lowest distance of 0,55. Thus, candidate sequence 702-2 is selected as final sequence 305'.

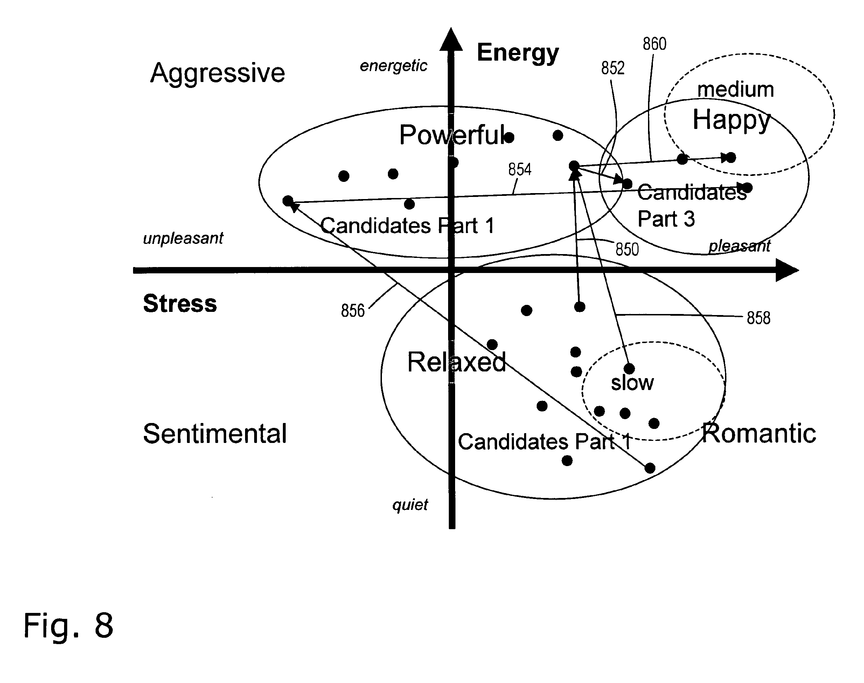

Fig. 8 shows a further embodiment illustrating how songs of candidate lists may be determined. Thereby, clusters of pieces of music are determined, wherein each cluster comprises the songs of a respective candidate list 303. Further details of Fig. 8 are explained below.

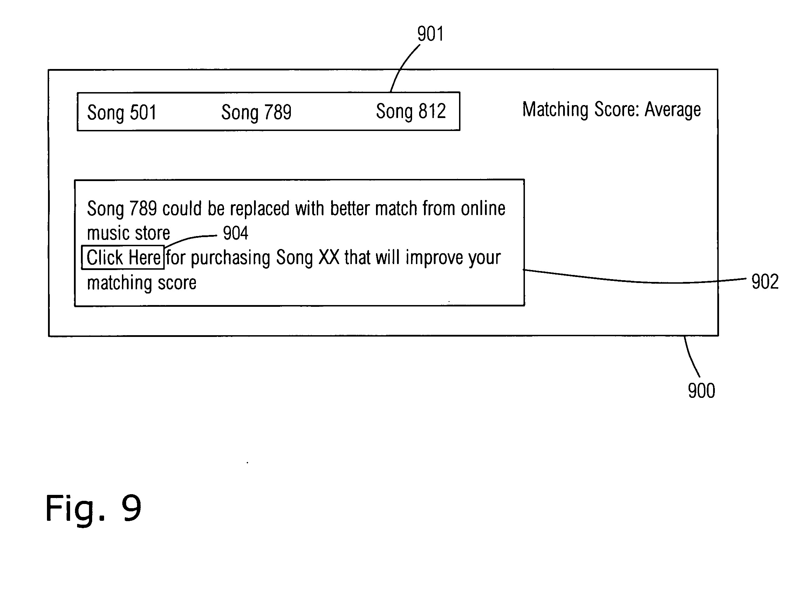

Fig. 9 shows a further embodiment of the invention, wherein on a display 900, the output sequence of songs is displayed to a user together with a matching score. The final sequence 901 in the example of Fig. 9 comprises song 501, song 789, and song 812. For this sequence 901, a matching score is determined, which matching score indicates the degree of matching of the songs of sequence 901 and the section descriptors 111. The matching score may be indicated to the user in a descriptive way stating that the matching score is e.g. low, average or high.

In case of a low or average matching score, the graphical user interface 902 may be displayed to the user. A graphical user interface 902 may indicate how the matching score could be improved. In the example of Fig. 9, a graphical user interface 902, e.g. a dialog box, may open up stating that "song 789 could be replaced with better match from online music store". In other words, the user is given the opportunity to improve the matching score by replacing a certain song of the sequence of songs 901 by a song from an online music store. There may be provided a button 904 on graphical user interface 902 which the user can operate in order to purchase a song that improves the matching score. Thus, the user is tempted to buy songs from an online music store in order to have a satisfying soundtrack.

The following elucidations may help to get a better understanding of embodiments of the invention or of the background thereof.

A semi-automatic soundtrack generation system for a video or images sequences has been described above, based on external contextual information provided by the user or by an automatic video analysis system. This information input is related to some assumedly more intuitive criteria, like e.g. music mood, speed or songs similarity, which have been previously assigned to different parts, i.e. sections, of this sequence. This input is analyzed by the system, generating some objective factors and features, which are matched with an associated database to derive different soundtracks possibilities for this sequence.

As is clear from the above, many current personal videos or photo series, which can be obtained with different products, like digital camera or camcorder often lack the touch of "entertaining" aspect, which could make those more interesting or enjoyable for family members, friends or other external people. However, on the professional side, almost every visual content like movie, report or news is accompanied with some background music or a soundtrack, which gives this content a more emotional and/or entertaining touch. For simplification, in the following, the single term video sequence will be used for describing these personal or professional video sequences as well as for an images sequence like a pictures show.

Creating a soundtrack for such a video sequence is a time consuming and sometimes complicated task (also for non-naive users) with the currently available software technology (figure 1A). This task should be made more intuitive and user friendly. Also with the coming era of available or downloadable huge music content, a lot of potential music tracks is kept unused in the user musical database and could be potentially used for increasing the entertainability of such a video sequence.

Therefore, a video sequence arrangement software with a semi-automatic approach to the generation of accompanying soundtracks is provided. The user can edit his video sequence by assigning a scenario to it, which defines different segments, i.e. sections, in time, where the music is associated with different intuitive keywords corresponding to the desired feeling. For example (figure 1B), in a sequence of images related to a sunset on the beach, the user could describe this first segment with a "sunset" context label. In a second segment, where the scene contains a car race, the context could be simply defined by "aggressive rock" or "powerful pop". The system is then in charge of converting these intuitive context labels in objective or subjective factors relevant to the music database, i.e. meta data of a music database. Based on these factors, i.e. meta data, it generates one or more musical soundtracks synchronously to these parts, with, e.g., a 'romantic' or 'relaxed' mood and a 'slow' tempo for the first segment and a selection of corresponding 'pop' music extracts with a 'powerful' mood for the second segment. The complete process of choosing the music extracts, selecting the most interesting parts and mixing the results is performed automatically by the system.

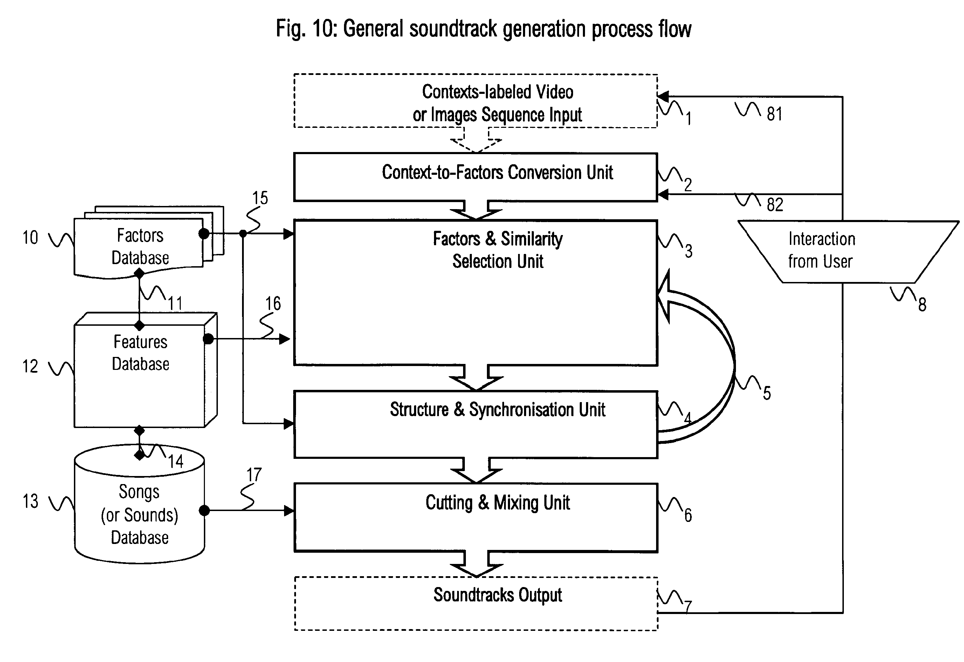

The user intervention 8, as described in figure 10, is limited to defining the different parts in time with the corresponding context labels 1 and listening to the resulting soundtrack 7. Optionally iterative interaction can also be provided to the more demanding user by offering the possibility of accepting or rejecting the generated soundtrack or some parts of it, i.e. to give feedback. This interaction can be performed at the context level 1.

The way of assigning the context labels to the video sequence could be done in a "PC-like" embodiment for example, with a graphical user interface by choosing some items in a menu, or dragging some icons corresponding to the desired context. Alternatively, another embodiment based on a speech recognition interface containing a restricted set of keywords or sentences necessary to define the different contexts could be also used.

In Fig. 10, the contextual interaction of the user with the video sequence 8 results finally in the definition of an array of *N* consecutive context labels 1 ordered in time: *Context_Array*= [{*t_{0,} c₀*}, {*tᵢ*, *cᵢ*}, ..., *t_{N}, c_{N}*}], where *tᵢ* is the time information of the corresponding part *i*. . In the simplest embodiment, *tᵢ* can be a structure of start point *sᵢ* and end point *eᵢ* or start point *sᵢ* and length *lᵢ* = *eᵢ* - *sᵢ* defined in seconds *tᵢ* = {*sᵢ, eᵢ*} or *tᵢ* = {*sᵢ, lᵢ* }, but it could be also defined as start and end frames for a video or the first and last pictures considered in this part of the pictures show. *cᵢ* is the corresponding contextual information for part *i* . In the simplest embodiment, this can be a set of predefined intuitive textual labels, describing different possible scenery: *c*ᵢ ∈ (*C₀*, *Cⱼ, Cₖ*), e.g., where *C*₀ = "sunset", *C*₁ = "beach", *C*₂ = "party", etc., but each C j can also be a combination of different other textual attributes more subjectively or objectively related to the desired music extract, e.g., *C*₀= ["mood: aggressive", "speed: medium", "artist: ACDC" ], *C*₁ = [ "style: pop", "mood: happy" ], etc.

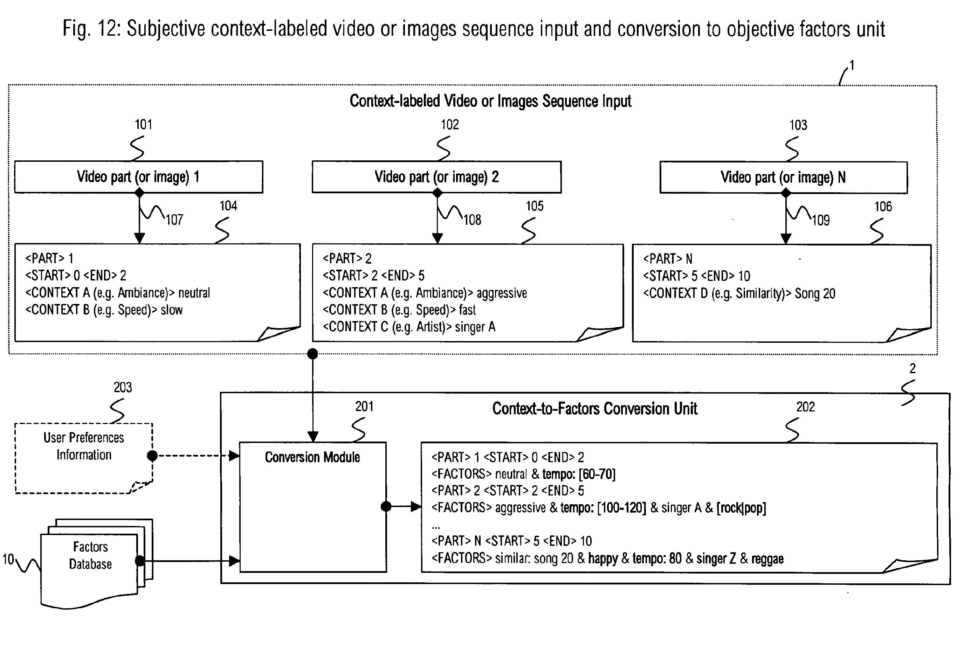

In a second step 2 and figure 12, each context *c*ᵢ of the contextual array *Context_Array* is converted to a factors list *fᵢ* = (ϕⁱ 0, ϕⁱ 1 , ϕⁱ *F*) resulting in the factors array *Factors_Array =* [{*t*_{0,} *f*₀}, {*tᵢ, fᵢ*} ..., {*t_{N}, f_{N}*}]*.* The preceding contextual information is analyzed to derive some factors and their corresponding feature values, which are directly related to the information stored in the music database 10,11,12. Each factor ϕⁱ is a member of a limited factors set *Factors_Set* : ϕⁱ ∈ (*F*₀, *F*₁, ..., *F_{L}*) of objective or subjective criteria associated to the description of a musical piece, which can be derived automatically from the music signal or be a part of the metadata information associated with it, e.g., *F*₁ *= Mood, F*₂ = *Rhythm, F*₃ *= Structure, F*₄ *= Genre,* etc.

Each factor *Fⱼ*, can be composed of a single feature, e.g. *F*₁ = *Mood* ∈ (*aggressive, happy, powerful, relaxed, romantic, sentimental*) or a features structure, e.g., *F*₂ *= Rhythm* = {*Speed; Tempo; Beats_Array*} *,* where each feature is composed of discrete, e.g., *Speed* ∈ (*very slow, slow, medium, fast, very fast*)*, Tempo* ∈ (*40, 41 ,* ..., *240*), or continuous values *Beats_Array =* [0, 0.25, ..., 320.0] ; in the previous array, each value corresponds to the time (in seconds) computed automatically for a particular song, where a beat occurs. The *Musical_Structure* factor is a structure *F*₃ *=* {*Summary; Segments_Array*}*,* which contains a description of each song parts; the *Summary* feature contains time information *tₛᵤₘ* (as defined previously for the contextual information) of the automatically extracted more similar segment of a song and the *Segments_Array =* [*s*_{1,} *sᵢ,* ..., *s_{P}*] contains segmental features in form of a structure *sᵢ,* = {*tᵢ*; *labelᵢ*; *lyrics ᵢ*;; ...}, where *tᵢ* is the time information of the segment *i,, labelᵢ* is an optional value from a limited set, e.g., *Labels_Set* ∈ (*intro, verse, ..., break, chorus*) describing the semantic information of this segment and *lyricsᵢ* is an optional field containing the lyrics of the song for this segment. Other features like key or notes can be added to this segmental structure.

For example, in the context depicted in figure 1B, the factors related to the context *C*₀ = "Sunset" could be translated to the following factors (meta data of a query): *F*₁ = *Mood = relaxed* v *romantic* and *F₂ = Rhythm =* {*Speed; Tempo; Beats_Array*}, where *Speed = slow, Tempo* ∈ (*60, 61,* ..., *90*) and *Beats_Array* = [ ]. For the context *C*₁ = "Powerful pop", the translation to factors is trivial in this case: *F*₁ = *Mood = powerful* and *F*₄ = *Genre = pop.* The translation step from context to factors can be also adaptive to or configurable by the user. It is possible to envisage contexts, where the user assigns feature values to the factors, depending on its personal taste. For example, in the context *C*₂ = "Amusement", a user A could define the factor *Mood* to be *Happy* with a *Medium Speed,* but a user B could prefer the *Mood Powerful,* with a *Fast Speed* and some predefined *Artist* and *Genre.* The resulting factor array after this step for user A is *Factors_Array(A)* = [{*t*_{*0*,} *f*₀}, {*t*_{1,} *f*₁}, {*t*_{2,} *f*₂}], with fₒ=(F₁ = relaxed v romantic, F₂ ={slow; (60,61,...,90); []}), f₁ =(F₁ =powerf ul, F₄=pop) and f₂= (F₁= happy, F₂ = {medium, (80,81,...,110);[]}

The third and fourth steps, called "Factors and Similarity Selection Unit 3" and "Structure and Synchronization Unit 4" in figure 10, are iterative and closely linked together by an internal loop 5. The system extracts in 3 the best song candidates corresponding to the factors defined by the *Factors_Array.* Since the list of possible song candidates for each part can be eventually huge if the context is too vaguely defined, the system applies automatically some further restrictions on these lists by using some continuity rules for the missing factors. The unit 4 is basically charged to take into account the time synchronization constraint domain related to the musical extracts. If such limitation is present in the user database, the interaction loop 5 changes the factors parameters correspondingly to generate other candidates.

For example, the continuity rule for the mood module is based on the following principle. Each song can be represented, for example, in a two dimensional (Stress, Energy) mood space as described in figure 8. Based on a statistical models set *StatMoodModel_Set* = (A, H, P, R, X, S) trained for each mood it is possible to compute the distances between each of these models and the statistical model of each test song candidates. From these distances, it is possible to construct different triangles, as displayed in figure 8, where the base is placed, e.g., on the "diagonal" axis aggressive-romantic of the previous figure. The position of the song in the database is then computed from the distances to these models. As given previously with the *Factors_Array(A),* the list of the corresponding feature values for *Mood* is (*relaxed* v *romantic, powerful, happy*). The list of possible candidates for each part are depicted by the small circles with different colors (light orange, black and lime) in this figure. By applying the continuity module, it is possible to choose, as illustrated by the path 850, 852, the best candidates matching the smallest path length in this space and still respecting the conditions of mood diversity for each part. The path 850, 852 gives the most similar songs in term of mood, whereas the path 854, 856 would gives the songs with the largest diversity in mood. Other factors, like *Speed,* can reduce the search space to the examples marked with a doted-line ellipse, leading, for example, to the path 858, 860 for the best candidates.

Optionally alternative choices can be offered to the most demanding user to take into account its preferences into a retroaction loop 8 in figure 10. If the user is not satisfied with the resulting soundtrack, a like/dislike choice possibility can be offered with 82, which can generate randomly another soundtrack by changing the songs, but still respecting the chosen context. Each possible intermediate path can also be generated with more control from the user if needed, by applying for example some scaling rule on the total path length, varying between the path 854, 856 and path 850, 852 in the case of mood; this choice can be provided, e.g., in the form of a slide bar giving continuous values between 0.0 and 1.0, where 0.0 would represent the shortest path (more mood similarity) and 1.0 the longest one (less mood similarity).

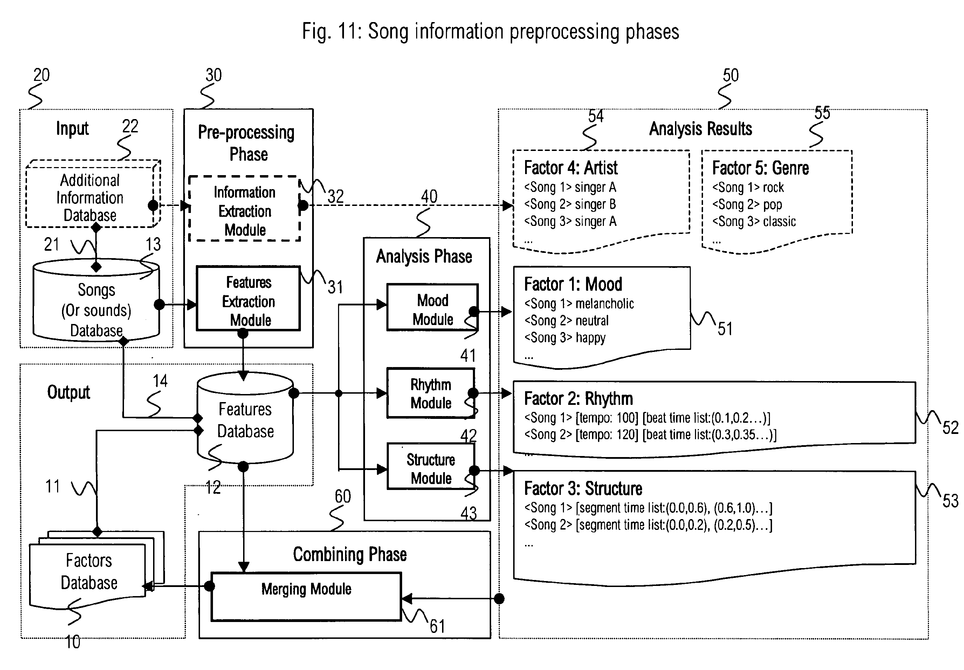

The system is also in charge of creating and updating automatically (if new musical content is added) the factors database, as described in figure 11, containing the previous information like mood, rhythm or structural information, from the music database of the user. Optionally this database can also be extended with external metadata information like e.g. artist, album or title of a song (CDDB like).

In the following a more abstract technical description is given of the general system envisaged starting from the contextual label description and ending with the soundtrack generation process.

As described in figure 10, input 1 of the system is a user-intuitive context-labeled video sequence. The context-to-factors conversion unit 2 (also referred to as context-to-query-converter or query mechanism) then processes this labeling information to deliver objective criteria for the following modules. The factors and similarity selection unit 3, also referred to as search engine, uses these criteria, based on the information linked 11 together in the objective factors 10 and song features 12 databases, to select a primary list of potential songs candidates from the database 13. This list is used by the structure and synchronization analysis unit 4, which estimates the different combination possibilities for soundtracks. In case where the original context is not defined precisely enough to generate such a soundtrack, the selection unit 3 is used again 5 to extend this primary list to create a more exhaustive songs list. The cutting and mixing unit 6 finally generates these soundtracks 7 from the songs database 13. In the case of interaction from the user 8, the context can also be modified 81 and the process performed iteratively, up to the point where she/he is satisfied.

As obvious from the previous process flow description, it relies to some extent on the information included in the factors 10 and features 12 databases. Figure 11 describes the song information extracting phases used to obtain these databases. The input 20 is composed of a song or sound database 13 eventually linked 21 to an optional additional database 22, containing information like, e.g. title, artist or music genre of those songs. In the preprocessing phase 30, some features derived with signal processing techniques performed by the features extraction module 31 are stored as primary output in the features database 12 and linked 14 to the songs database 13. These features are then analyzed by different signal processing modules 40, like e.g. mood 41, rhythm 42 or structure 43 analysis, to compute many different objective factors 50, like e.g. mood 51, beat time list and tempo 52 or segment time list 53 among others. Optionally an information extraction module 32 can be used to derive other objective factors 50, like e.g. artist 54 or genre 55, from the additional information database 22. In the combining phase 60, the merging module 61 combines all these factors to create the second output result stored in the factors database 10 with the corresponding link 11 to the features database 12.

In the following figures, each process from figure 10 is described in more details. The input 1 in figure 12 is a video sequence that a user or an automatic sequencing system has divided in time into different parts 101-103, each labeled with one or many contextual keywords, possibly different for each part, associated to relatively intuitive notions or concepts like mood and music similarity or more common criteria like speed, artist or music genre. The method for creating this labeling could be an interactive graphical user interface, where the user can select among the different options, an automatic video or images scene analysis system, or a combination of both. The resulting information can be stored in an electronic form like one or many separate documents 104-106 linked timely 107-109 to the corresponding video parts 101-103. Since the contextual information is assumed to be related to the user wishes and consequently more of subjective nature, a context to factors conversion module 201, using some of the information contained in the factors database 10, processes the previous information 104-106 to generate an electronic document 202 containing some objective factors, which can be evaluated in the following phases in light of the factors database 10. Optionally, this conversion can be performed with the help of some user preferences information 203, which can be part of the system or obtained from other separate systems. These preferences can be used to fill out missing contextual and/or factors information. For example, a context like 'fast' speed is converted to a range of tempi corresponding to the subjective user evaluation or a context like 'similar to song 20' is appended with the corresponding information concerning this song, like mood, tempo, artist, etc. This module also solves the contextual time continuity aspect. For example, if a context like mood is defined for one part of the song, this is also extended to the following parts.

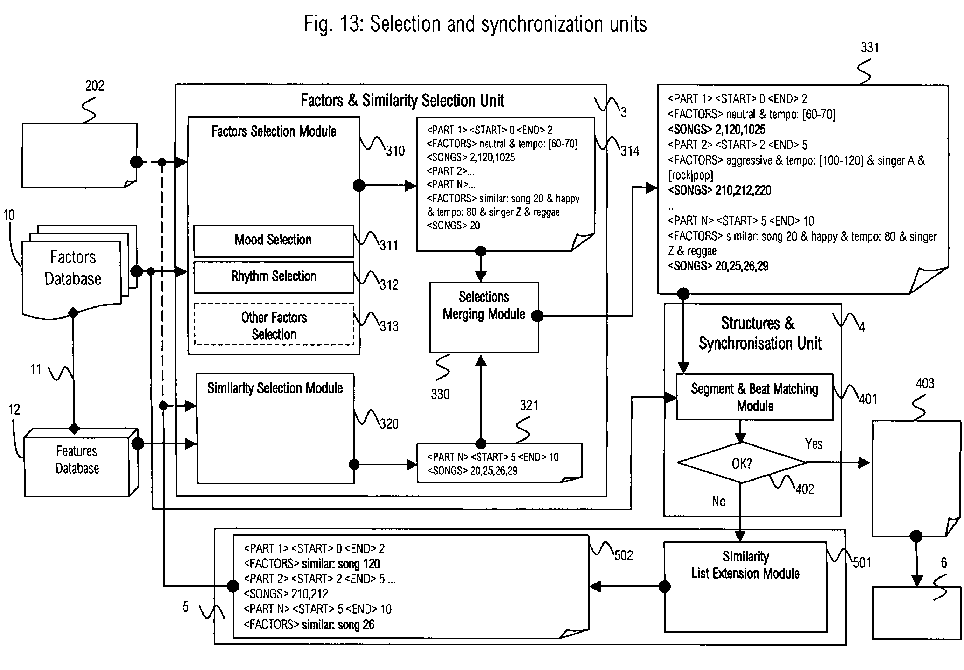

In figure 13, the factors-based and similarity selection unit 3 process the preceding input 202. The factors selection module itself 310 uses separate sub modules, like mood 311, rhythm 312, or other factors 313 to search for the corresponding songs, which fulfills the corresponding factors. It appends these songs list to the original input 202 and stores the result in the factors selection list 314. In the case where some parts of the original context 202 are related to songs similarity, the similarity selection module 320 chooses the most similar songs 321 based on the information stored in the features database 12. Both lists are merged by the selections merging module 330 and the result 331 passed to the structure and synchronization unit 4. The corresponding segment and beat matching module 401 analyzes the time information of each part of the list 331 to find the corresponding matching segments, which are possibly beat-synchronous in the factors database 10. In the case 402 where, based on the current available information, some parts cannot be synchronized, the list similarity extension module 501 requests for an extended songs list to the similarity selection module 320, by selecting the songs 502, which are considered as best candidates from the list 331. A new corresponding list 331 is created and parsed again by the synchronization unit 4. An iterative process can be envisaged, if necessary, which should deliver some songs satisfying at least partially the original context given by the user. The unit 4 finally delivers a list of all possible songs and corresponding segments list 403, which is delivered to the cutting and mixing unit 6. As described in figure 10 this unit chooses some of the songs and uses the segmental information to extract the corresponding signals from the database 13 and performs eventually some smoothing transition to generate the final soundtracks output 7.

## Claims

1. A Method for generating a soundtrack, comprising:
providing a description of at least two sections of a sequence of pictures;
determining a query for said at least two sections based on said description, said query comprising meta data of a music database;
determining a candidate list for essentially each of said at least two sections based on a respective query, wherein a respective candidate list comprises at least one piece of music of said music database;
selecting a piece of music for each of said at least two sections from a respective candidate list.

2. Method according to claim 1, wherein a first piece of music is randomly selected from a first candidate list, and a second piece of music is selected from a second candidate list depending on said first piece of music.

3. Method according to claim 2, wherein said second piece of music is selected based on a distance measure.

4. Method according to claim 2 or 3, wherein a distance measure is determined essentially for all pieces of music of said second candidate list with respect to said first piece of music and said second piece of music has a lowest distance measure of all pieces of music of said second candidate list.

5. Method according to any of claims 3 to 4, wherein said distance measure depends on meta data of said first and/or second piece of music.

6. Method according to claim 5, wherein said meta data is descriptive of a mood, genre, and/or era of pieces of music of said music database.

7. Method according to any of claims 3 to 6, wherein said distance measure depends on an audible property of said first and/or second piece of music.

8. Method according to any of claims 2 to 7, wherein said second piece of music is selected from said second candidate list depending on a total length in time of said sequence of pictures.

9. Method according to claim 1, wherein a first and second piece of music is selected from a first and second candidate list, respectively, depending on a total length in time of said sequence of pictures.

10. Method according to any of claims 2 to 9, wherein said first and/or said second piece of music are determined based on a Viterbi Search and/or based on Dynamic Time Warping.

11. Method according to any of the preceding claims, wherein said query depends on a user profile.

12. Method according to claim 11, wherein user feedback is received for selected pieces of music which are selected by said step of selecting, and wherein said user profile is updated based on said user feedback.

13. Method according to any of the preceding claims, wherein said query depends on a user request for a style of music.

14. Method according to any of the preceding claims, wherein said step of selecting depends on a user request for a style of music.

15. Method according to any of the preceding claims, wherein said sequence is a video sequence or a sequence of still pictures.

16. Method according to any of the preceding claims, wherein said pieces of music comprise essentially only a chorus.

17. A computer program product including computer program instructions that cause a computer to execute a method of generating a soundtrack, comprising:
providing a description of at least two sections of a sequence of pictures;
determining a query for said at least two sections based on said description, said query comprising meta data of a music database;
determining a candidate list for each of said at least two sections based on a respective query, wherein a respective candidate list comprises at least one piece of music of said music database;
selecting a piece of music for each of said at least two sections from a respective candidate list.

18. Device for generating a soundtrack, comprising:
a graphical user interface configured to allow a user to provide a description of at least two sections of a sequence of pictures;
a query mechanism configured to determine for said at least two sections a query based on said description, said query comprising meta data of a music database;
a search engine configured to determine for each of said at least two sections a candidate list based on a respective query, wherein a respective candidate list comprises at least one piece of music of said music database;
a selection engine configured to select a piece of music for each of said at least two sections from a respective candidate list.

19. Device according to claim 18, wherein said graphical user interface comprises a feedback mechanism configured to receive feedback of a user with respect to selected pieces of music.

20. Device according to claim 19, comprising a user profiler configured to adapt a user profile based on said feedback, wherein said query depends on said user profile.

21. Means for generating a soundtrack, comprising:
means for providing a description of at least two sections of a sequence of pictures;
means for determining a query for said at least two sections based on said description, said query comprising meta data of a music database;
means for determining a candidate list for each of said at least two sections based on a respective query, wherein a respective candidate list comprises at least one piece of music of said music database; and
means for selecting a piece of music for each of said at least two sections from a respective candidate list.
